# EUROPEAN PATENT APPLICATION

(11) **EP 4 471 679 A1**
(43) Date of publication of application: **04.12.2024**
(21) Application number: 22923753.2
(22) Date of filing: 25.01.2022
(51) Int. Cl.: G06N 99/00

(54) **PARAMETER OPTIMIZATION PROGRAM, PARAMETER OPTIMIZATION METHOD, AND INFORMATION PROCESSING DEVICE**

(71) Applicant: FUJITSU LIMITED, Kawasaki-shi, Kanagawa 211-8588 (JP)
(72) Inventor: TAKAHASHI, Norihiko, Kawasaki-shi, Kanagawa 211-8588 (JP)
(74) Representative: Hoffmann Eitle
(86) International application number: PCT/JP2022/002668
(87) International publication number: WO 2023/144884

(57) **Abstract**

An optimization calculation time of a parameter is shortened.

An information processing apparatus (10) executes first parameter adjustment processing for calculating an updated value of each of a plurality of parameters so that an expected value of energy takes a local minimum value, based on an expected value of energy calculated using a variational quantum circuit (2) including the plurality of parameters. Next, the information processing apparatus (10) determines whether or not to set each of the plurality of parameters as an adjustment target in second parameter adjustment processing, based on whether or not a change amount between values before and after update of each of the plurality of parameters by the first parameter adjustment processing is equal to or more than a threshold. Then, the information processing apparatus (10) executes the second parameter adjustment processing on the parameter determined as the adjustment target.

## Description

### TECHNICAL FIELD

The present invention relates to a parameter optimization program, a parameter optimization method, and an information processing apparatus.

### BACKGROUND ART

As a method for performing quantum chemical calculation using a computer such as a quantum computer or a classical computer, there is a variational quantum eigensolver (VQE) algorithm. This algorithm is used to obtain an energy value of a ground state of a substance.

In the quantum chemical calculation (VQE calculation) by the VQE algorithm, for example, the quantum computer measures an expected value of a quantum state using a variational quantum circuit parameterized by parameters including a plurality of parameters. An expected value of energy is obtained from the expected value of the quantum state. The expected value of the energy is a total (total energy value) of energy calculated for each quantum bit. The classical computer executes parameter adjustment processing so as to lower the expected value of the energy (expected value of energy becomes local minimum value), based on the expected value of the quantum state. Here, the parameter adjustment processing may be referred to as optimization processing. Then, the quantum computer measures the expected value of the quantum state again, using the optimized parameter value.

The quantum computer and the classical computer repeat the measurement of the expected value of the quantum state and the optimization of the parameter until the energy converges. Hereinafter, this repetitive processing is referred to as "loop processing" in the VQE.

As a technique regarding the quantum calculation, a quantum calculation device has been proposed that can execute a quantum variation algorithm even if an error rate of the quantum calculation device is not a sufficiently small value, for example. Furthermore, a quantum information processing method has been also proposed that obtains a derivative of energy when quantum calculation of energy of a system is performed using the VQE.

Note that details of a method for calculating the energy of the ground state using the VQE is disclosed in papers. Furthermore, as a technique that can be used for optimization calculation of the parameter in the VQE calculation, for example, a technique such as a natural gradient method is proposed.

### CITATION LIST

### PATENT DOCUMENT

Patent Document 1: Japanese Laid-open Patent Publication No. 2021-26370
Patent Document 2: Japanese Laid-open Patent Publication No. 2020-187451

### NON-PATENT DOCUMENT

Non-Patent Document 1: Alberto Peruzzo, Jarrod McClean, Peter Shadbolt, Man-Hong Yung, Xiao-Qi Zhou, Peter J. Love, Alan Aspuru-Guzik, Jeremy L. O'Brien, "A variational eigenvalue solver on a photonic quantum processor", Nature Communications, 23 July 2014, volume 5, Article number: 4213 (2014)
Non-Patent Document 2: James Stokes, Josh Izaac, Nathan Killoran, Giuseppe Carleo, "Quantum Natural Gradient", Quantum, 2020-05-25, volume 4, page 269
Non-Patent Document 3: Naoki Yamamoto, "On the natural gradient for variational quantum eigensolver", arXiv:1909.05074, 11 Sep 2019

### SUMMARY OF INVENTION

### TECHNICAL PROBLEM

As one of bottlenecks in performing VQE calculation, optimization calculation for optimizing a parameter is exemplified. In the VQE calculation, when a scale of a system to be calculated increases, the number of quantum bits used for the calculation also increases. As a result, the number of parameters increases, and a calculation time required for the optimization calculation by the classical computer also increases.

In one aspect, an object of this case is to shorten an optimization calculation time of a parameter.

### SOLUTION TO PROBLEM

In one proposal, a parameter optimization program for causing a computer to execute the following processing is provided.

The computer executes first parameter adjustment processing for calculating an updated value of each of a plurality of parameters so that an expected value of energy takes a local minimum value, based on the expected value of the energy calculated using a variational quantum circuit including the plurality of parameters. The computer determines whether or not to set each of the plurality of parameters as an adjustment target in second parameter adjustment processing, based on whether or not a change amount between values before and after update of each of the plurality of parameters by the first parameter adjustment processing is equal to or more than a threshold. Then, the computer executes the second parameter adjustment processing on the parameter determined as the adjustment target.

### ADVANTAGEOUS EFFECTS OF INVENTION

According to one aspect, a parameter optimization calculation time is shortened.

The object described above and other objects, features, and advantages of the present invention will become clear from the following description related to the appended drawings, which represent preferred embodiments as examples of the present invention.

### BRIEF DESCRIPTION OF DRAWINGS

FIG. 1 is a diagram illustrating an example of a parameter optimization method for shortening an optimization calculation time.
FIG. 2 is a diagram illustrating an example of a system configuration of a second embodiment.
FIG. 3 is a diagram illustrating an example of hardware of a classical computer.
FIG. 4 is a diagram illustrating an example of a variational quantum circuit.
FIG. 5 is a block diagram illustrating an example of functions of a classical computer for VQE calculation.
FIG. 6 is a flowchart illustrating an example of a processing procedure of the VQE calculation.
FIG. 7 is a flowchart illustrating an example of a procedure of optimization calculation processing.
FIG. 8 is a diagram illustrating a comparative example of VQE calculation processing for hydrogen molecules.
FIG. 9 is a diagram illustrating an example of a change situation of a value for each parameter.
FIG. 10 is a diagram illustrating an example of a calculation result of a first case (comparative example) of the VQE calculation processing for the hydrogen molecules.
FIG. 11 is a diagram illustrating an example of efficiency improvement of the VQE calculation processing for the hydrogen molecules.
FIG. 12 is a diagram illustrating an example of a calculation result in a case where the efficiency of the VQE calculation processing for the hydrogen molecules is improved.
FIG. 13 is a diagram illustrating an example of a result of VQE calculation processing for lithium hydride.

### DESCRIPTION OF EMBODIMENTS

Hereinafter, the present embodiments will be described with reference to the drawings. Note that each of the embodiments may be implemented in combination with a plurality of embodiments as long as no contradiction arises.

### [First Embodiment]

A first embodiment is a parameter optimization method for reducing the number of parameters of a variational quantum circuit in a VQE calculation process and shortening an optimization calculation time.

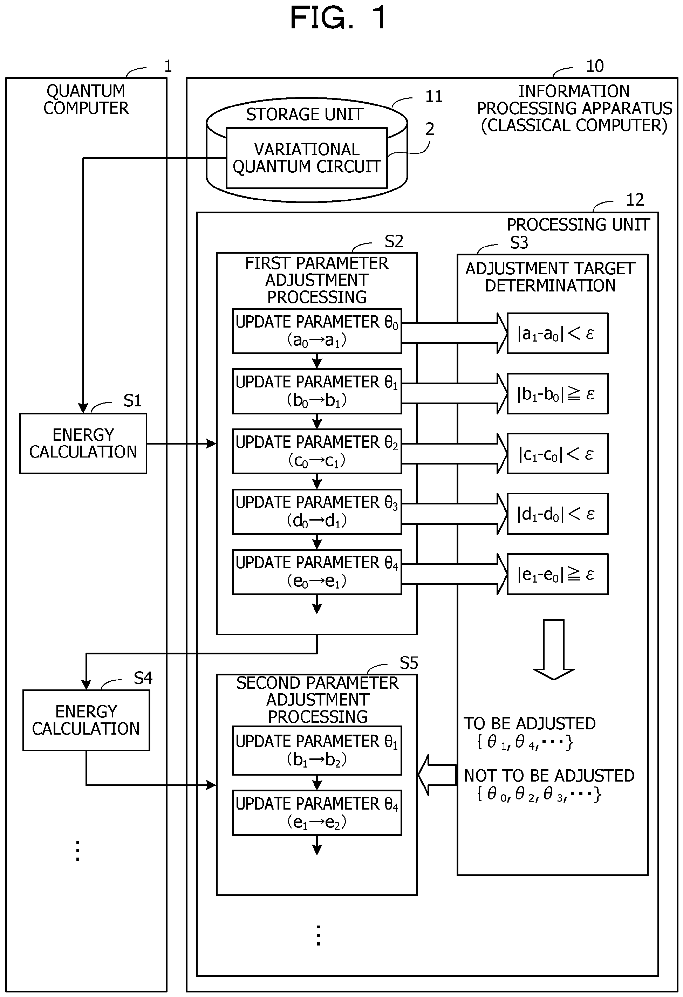

FIG. 1 is a diagram illustrating an example of the parameter optimization method for shortening the optimization calculation time. In FIG. 1, an information processing apparatus 10 that implements the parameter optimization method is illustrated. The information processing apparatus 10 can control a quantum computer 1, for example, by executing a parameter optimization program and execute the parameter optimization method.

The information processing apparatus 10 is, for example, a classical computer and includes a storage unit 11 and a processing unit 12. The storage unit 11 is, for example, a memory or a storage device included in the information processing apparatus 10. The processing unit 12 is, for example, a processor or an arithmetic circuit included in the information processing apparatus 10.

The storage unit 11 stores a variational quantum circuit 2. The variational quantum circuit 2 is a quantum circuit for obtaining an energy value of a ground state of a substance using a variation method. The variational quantum circuit 2 indicates a procedure of calculation executed by the quantum computer 1, in VQE calculation. A plurality of parameters is used for the variational quantum circuit 2. The lowest value of the energy value calculated based on the variational quantum circuit 2 is the energy value of the ground state of the substance.

The energy value of the ground state changes according to values of the plurality of parameters of the variational quantum circuit 2. Processing for adjusting the values of the plurality of parameters so as to obtain the energy value of the ground state is parameter optimization calculation.

The processing unit 12 executes first parameter adjustment processing for calculating an updated value of each of the plurality of parameters so that an expected value of energy takes a local minimum value, based on an expected value of energy calculated using the variational quantum circuit 2 including the plurality of parameters. Next, the processing unit 12 determines whether or not to each of the plurality of parameters is set as an adjustment target in second parameter adjustment processing, based on whether or not a change amount between values before and after update of each of the plurality of parameters by the first parameter adjustment processing is equal to or more than a threshold ε. The change amount between the values before and after the update is, for example, an absolute value of a difference between the value before the update and the value after the update. Then, the processing unit 12 executes the second parameter adjustment processing on the parameter determined as the adjustment target.

For example, the processing unit 12 determines the parameter, of which the change amount is equal to or more than the threshold ε, among the plurality of parameters as a next or subsequent optimization calculation target. Furthermore, the processing unit 12 excludes the parameter, of which the change amount is less than the threshold ε, among the plurality of parameters from the next and subsequent optimization calculation targets.

Note that the processing unit 12 may execute the processing for determining whether or not to set the parameter as the adjustment target, only after the first parameter adjustment processing in the parameter adjustment processing to be repeatedly executed. In that case, the processing unit 12 determines whether or not to set each of the plurality of parameters as an adjustment target in the second parameter adjustment processing to be repeatedly executed for the second or subsequent time, after the first parameter adjustment processing at the first time, in the optimization calculation to be repeatedly executed.

In this way, it is possible to reduce the number of parameters to be adjusted in a VQE calculation process. For example, in the VQE calculation, first, the quantum computer 1 calculates a fiducial value of the energy based on the variational quantum circuit 2, using an initial value of the plurality of parameters (step S1). The quantum computer 1 transmits the calculated fiducial value of the energy to the information processing apparatus 10.

The processing unit 12 of the information processing apparatus 10 executes the first parameter adjustment processing (first parameter adjustment processing) (step S2). For example, the processing unit 12 calculates a value after the parameter adjustment processing for each of parameters θ₀, θ₁, θ₂, θ₃, θ₄, ... and updates the values of the parameters. In the example in FIG. 1, the value of the parameter θ₀ is updated from a₀ to a₁. The value of the parameter θ₁ is updated from b₀ to b₁. The value of the parameter θ₂ is updated from c₀ to c₁. The value of the parameter θ₃ is updated from d₀ to d₁. The value of the parameter θ₄ is updated from e₀ to e₁.

The processing unit 12 determines a parameter to be set as the adjustment target in the second and subsequent parameter adjustment processing (second parameter adjustment processing), based on a result of the first parameter adjustment processing (step S3). For example, the processing unit 12 calculates the change amount between the values before and after the update of each of the plurality of parameters by the first parameter adjustment processing. For example, a change amount of the parameter θ₀ is | a₁ - a₀ |. Then, the processing unit 12 compares the change amount with the predetermined threshold ε. Then, the processing unit 12 determines a parameter of which the change amount is equal to or more than the threshold ε (parameters θ₁, θ₄, ... in example in FIG. 1) as the adjustment target in the subsequent parameter adjustment processing. Furthermore, the processing unit 12 excludes a parameter of which the change amount is less than the threshold ε (parameters θ₀, θ₂, θ₃, ... in example in FIG. 1) from the target in the subsequent parameter adjustment processing.

The quantum computer 1 calculates the fiducial value of the energy based on the variational quantum circuit 2 to which the parameter having the value that has been updated by the first parameter adjustment processing is applied (step S4). Then, the processing unit 12 of the information processing apparatus 10 executes the second parameter adjustment processing based on a newly calculated expected value of the energy (step S5). In the second parameter adjustment processing, a value adjusted so that the expected value of the energy becomes a local minimum value for the parameter (parameters θ₁, θ₄,...) to be adjusted by adjustment target determination processing is calculated. Then, the processing unit 12 updates the value of the parameter to be adjusted.

Thereafter, the energy calculation by the quantum computer 1 and the parameter adjustment processing by the processing unit 12 of the information processing apparatus 10 are alternately repeated until the fiducial value of the energy converges. A parameter to be adjusted in the third and subsequent parameter adjustment processing is, for example, the same as the parameter to be adjusted in the second parameter adjustment processing.

In this way, by excluding the parameter of which the change amount between the values before and after the update by the parameter adjustment processing is equal to or less than the threshold ε from the adjustment target in the subsequent parameter adjustment processing, it is possible to execute the parameter adjustment processing with the smaller number of parameters. As a result, it is possible to reduce a time required for optimization calculation for obtaining an optimum value of the parameter (value of parameter at which expected value of energy becomes local minimum value) in the VQE calculation. In this case, a calculation time of the VQE calculation is reduced approximately according to an order of the number of parameters.

Note that, the adjustment target determination processing is executed after the first parameter adjustment processing in the example in FIG. 1. However, the processing unit 12 may execute the adjustment target determination processing each time when the parameter adjustment processing is executed. As a result, in a case where there is the parameter of which the change amount between the values before and after the update is less than the threshold ε in the second and subsequent parameter adjustment processing, it is possible to exclude the parameter from the adjustment targets of the subsequent parameter adjustment processing. As a result, it is possible to further increase the speed of the VQE calculation.

### [Second Embodiment]

A second embodiment reduces the number of parameters of a variational quantum circuit and shortens a time of optimization calculation of the parameter, in VQE calculation using a quantum computer.

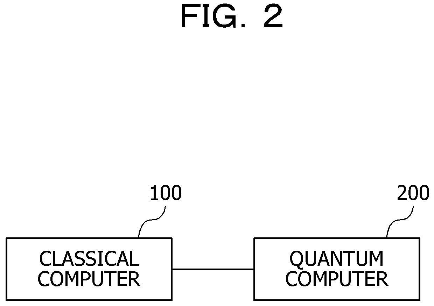

FIG. 2 is a diagram illustrating an example of a system configuration of the second embodiment. A classical computer 100 and a quantum computer 200 are coupled by a network. The classical computer 100 is a Neumann-type computer. The classical computer 100 executes processing such as the parameter optimization calculation in the VQE calculation. The quantum computer 200 is a quantum-gate-type quantum computer that performs desired calculation, by operating a state of a quantum bit based on a quantum circuit. The quantum computer 200 calculates an expected value of energy according to a value of a designated parameter, based on the variational quantum circuit, in the VQE calculation.

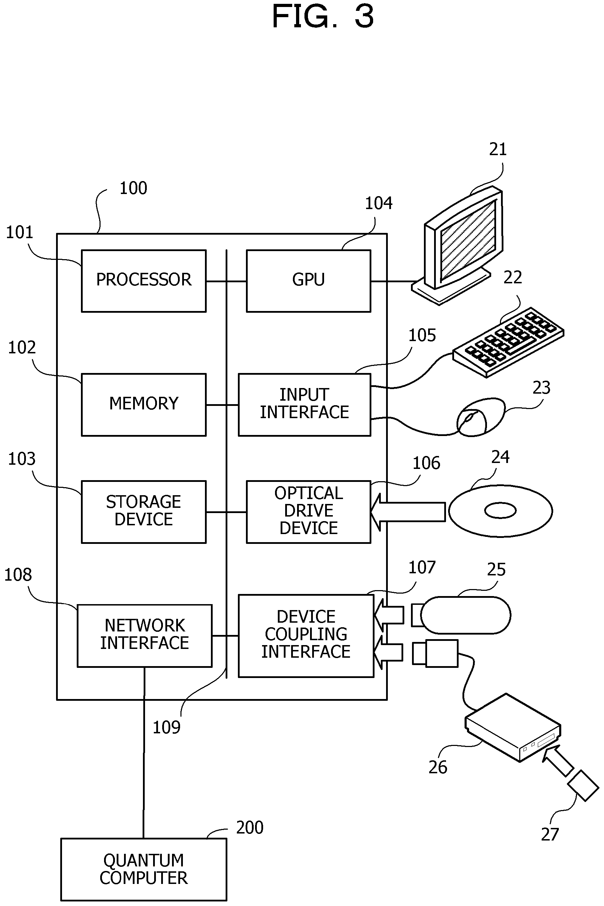

FIG. 3 is a diagram illustrating an example of hardware of a classical computer. In the classical computer 100, an entire device is controlled by a processor 101. A memory 102 and a plurality of peripheral devices are coupled to the processor 101 via a bus 109. The processor 101 may be a multiprocessor. The processor 101 is, for example, a central processing unit (CPU), a micro processing unit (MPU), or a digital signal processor (DSP). At least a part of functions implemented by the processor 101 executing a program may be implemented by an electronic circuit such as an application specific integrated circuit (ASIC) or a programmable logic device (PLD).

The memory 102 is used as a main storage device of the classical computer 100. The memory 102 temporarily stores at least some of operating system (OS) programs and application programs to be executed by the processor 101. Furthermore, the memory 102 stores various types of data to be used in processing by the processor 101. As the memory 102, for example, a volatile semiconductor storage device such as a random access memory (RAM) is used.

Examples of the peripheral devices coupled to the bus 109 include a storage device 103, a graphics processing unit (GPU) 104, an input interface 105, an optical drive device 106, a device coupling interface 107, and a network interface 108.

The storage device 103 electrically or magnetically writes/reads data in/from a built-in recording medium. The storage device 103 is used as an auxiliary storage device of the classical computer 100. The storage device 103 stores OS programs, application programs, and various types of data. Note that, as the storage device 103, for example, a hard disk drive (HDD) or a solid state drive (SSD) may be used.

The GPU 104 is an arithmetic device that executes image processing, and is also called a graphic controller. A monitor 21 is coupled to the GPU 104. The GPU 104 causes a screen of the monitor 21 to display an image according to an instruction from the processor 101. Examples of the monitor 21 include a display device using organic electro luminescence (EL), a liquid crystal display device, and the like.

A keyboard 22 and a mouse 23 are coupled to the input interface 105. The input interface 105 transmits signals sent from the keyboard 22 and the mouse 23 to the processor 101. Note that the mouse 23 is an example of a pointing device, and another pointing device may also be used. Examples of the another pointing device include a touch panel, a tablet, a touch pad, a track ball, and the like.

The optical drive device 106 uses laser light or the like to read data recorded in an optical disk 24 or write data to the optical disk 24. The optical disk 24 is a portable recording medium in which data is recorded in a readable manner by reflection of light. Examples of the optical disk 24 include a digital versatile disc (DVD), a DVD-RAM, a compact disc read only memory (CD-ROM), a CD-recordable (R)/rewritable (RW), and the like.

The device coupling interface 107 is a communication interface for coupling the peripheral devices to the classical computer 100. For example, a memory device 25 and a memory reader/writer 26 may be coupled to the device coupling interface 107. The memory device 25 is a recording medium equipped with a communication function with the device coupling interface 107. The memory reader/writer 26 is a device that writes data to a memory card 27 or reads data from the memory card 27. The memory card 27 is a card type recording medium.

The network interface 108 is coupled to the quantum computer 200 via the network. The network interface 108 transmits information such as a quantum calculation request to the quantum computer 200 and receives information indicating a calculation result from the quantum computer 200. The network interface 108 is, for example, a wired communication interface coupled to a wired communication device such as a switch or a router with a cable.

The classical computer 100 can implement processing functions according to the second embodiment with the hardware described above. Note that the device described in the first embodiment may also be implemented by hardware similar to that of the classical computer 100 illustrated in FIG. 3.

The classical computer 100 implements the processing functions of the second embodiment by executing, for example, a program recorded in a computer-readable recording medium. The program in which processing content to be executed by the classical computer 100 is described can be recorded in various recording media. For example, the program to be executed by the classical computer 100 may be stored in the storage device 103. The processor 101 loads at least a part of the programs in the storage device 103 into the memory 102 and executes the program. Furthermore, it is also possible to record the program to be executed by the classical computer 100 in a portable recording medium such as the optical disk 24, the memory device 25, or the memory card 27. The program stored in the portable recording medium may be executed after being installed in the storage device 103 under the control of the processor 101, for example. Furthermore, the processor 101 may read the program directly from the portable recording medium, and execute the program.

In such a system, the classical computer 100 and the quantum computer 200 perform the VQE calculation in cooperation. A plurality of parameters θ is used for the variational quantum circuit used for the VQE calculation.

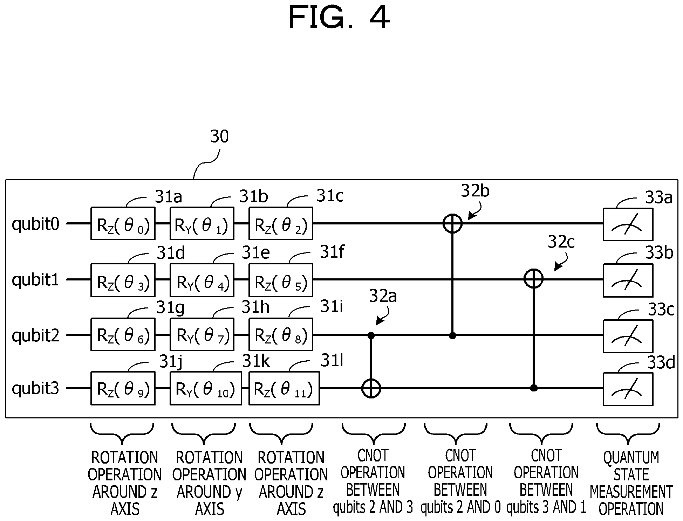

FIG. 4 is a diagram illustrating an example of the variational quantum circuit. In FIG. 4, an example of a variational quantum circuit 30 for obtaining a fiducial value of energy of a hydrogen molecule is illustrated. In the variational quantum circuit 30, operations for four quantum bits (qubits 0 to 3) are illustrated. A gate operation for the quantum bit is illustrated on a horizontal line associated with each quantum bit. When the quantum computer 200 performs quantum calculation, the gate operation set for each quantum bit is performed in order from the left.

One-quantum bit gates 31a to 31l are quantum gates that perform a rotation operation around a predetermined axis by a designated angle. It is illustrated that the variational quantum circuit 30 performs a rotation operation around a z axis, a rotation operation around a y axis, and a rotation operation around the z axis in order, for each quantum bit.

Rotation angles of the one-quantum bit gates 31a to 31l are indicated by the plurality of parameters θ (θ = {θ₁, θ₂,...}). The rotation angles of the one-quantum bit gates 31a to 31c to act on the first quantum bit (qubit 0) are respectively θ₀, θ₁, and θ₂. The rotation angles of the one-quantum bit gates 31d to 31f to act on the second quantum bit (qubit 1) are respectively θ₃, θ₄, and θ₅. The rotation angles of the one-quantum bit gates 31g to 31i to act on the third quantum bit (qubit 2) are respectively θ₆, θ₇, and θ₈. The rotation angles of the one-quantum bit gates 31j to 31l to act on the fourth quantum bit (qubit 3) are respectively θ₉, θ₁₀, and θ₁₁.

After the rotation operation around the predetermined axis, gate operations by two-quantum bit gates 32a, 32b, and 32c are performed. The two-quantum bit gate 32a is a CNOT gate indicating a CNOT operation between third and fourth quantum bits. In this CNOT gate, the third quantum bit is a control quantum bit, and the fourth quantum bit is a target quantum bit. The two-quantum bit gate 32b is a CNOT gate indicating a CNOT operation between the third and first quantum bits. In this CNOT gate, the third quantum bit is a control quantum bit, and the first quantum bit is a target quantum bit. The two-quantum bit gate 32c is a CNOT gate indicating a CNOT operation between the fourth and second quantum bits. In this CNOT gate, the fourth quantum bit is a control quantum bit, and the second quantum bit is a target quantum bit.

References 33a to 33d indicated at a right end of a line corresponding to each quantum bit indicate a measurement operation of a quantum state.

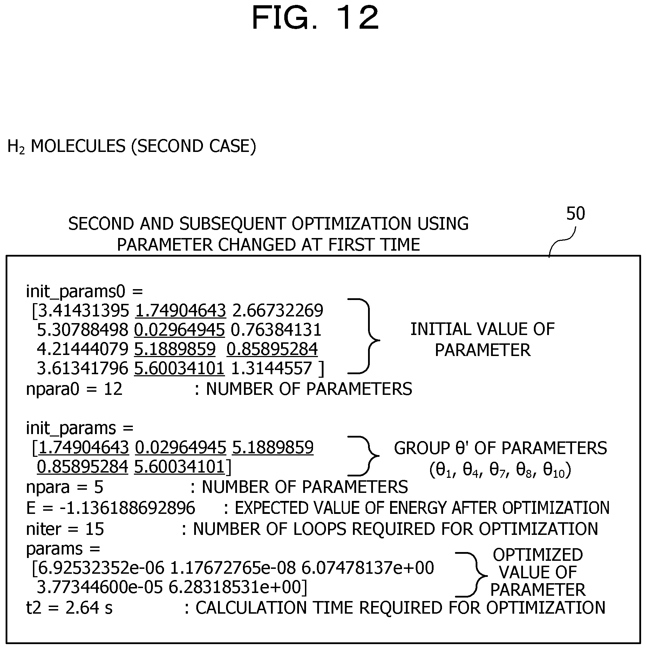

In the example illustrated in FIG. 4, 12 parameters θ₁ to θ₁₁ are used. Here, the number of the plurality of parameters θ used for the variational quantum circuit 30 that performs the VQE calculation does not change through loop processing in a VQE. That is, when the variational quantum circuit 30 to be used is determined, the number of parameters is determined. Furthermore, when a scale of a system to be calculated increases, the number of parameters increases.

Here, in optimization processing of the parameter θ (parameter adjustment processing), when all the values of the plurality of parameters θ are updated for each loop processing, a calculation time required for optimization calculation in the one loop processing also increases as the number of parameters increases. Furthermore, as the number of parameters to be updated is larger, the number of times of loop processing before the energy converges also increases. As a result, a total calculation time increases, and more calculation cost is required.

Therefore, the classical computer 100 according to the second embodiment performs the optimization calculation using all the prepared parameters included in the variational quantum circuit 30 only for the first time, in the optimization calculation of the plurality of parameters θ of the variational quantum circuit 30 for the VQE calculation. Then, the classical computer 100 determines whether or not the value of each parameter after the first optimization changes by a threshold or more from an initial value. The classical computer 100 excludes a parameter of which the value of the parameter after the first optimization does not change by the threshold or more from the initial value, from an optimization target, and extracts only a parameter of which the value changes by the threshold or more as the optimization target. Then, the classical computer 100 performs the optimization calculation only on the extracted parameter for the second and subsequent times. As a result, since the optimization calculation can be performed with a smaller number of parameters, the calculation time can be shortened.

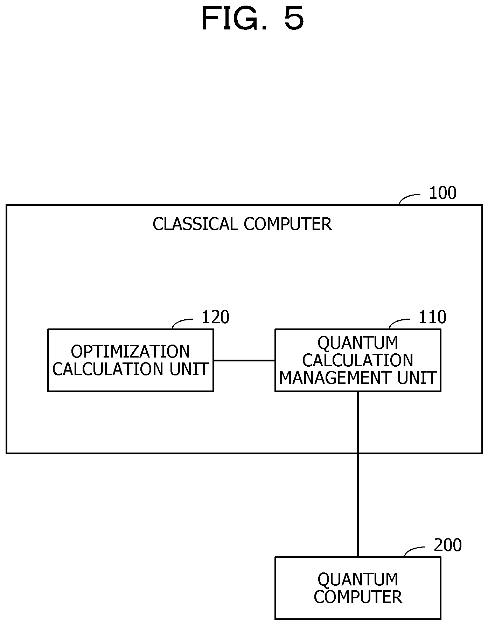

FIG. 5 is a block diagram illustrating an example of functions of the classical computer for the VQE calculation. The classical computer 100 includes a quantum calculation management unit 110 and an optimization calculation unit 120.

The quantum calculation management unit 110 generates a variational quantum circuit for calculating energy of a quantum many-body system such as molecules, and instructs the quantum computer 200 to perform energy calculation based on the variational quantum circuit. For example, the quantum calculation management unit 110 generates a variational quantum circuit for quantum chemical calculation and sets a parameter θ regarding a gate operation at a quantum gate in the variational quantum circuit. The quantum calculation management unit 110 sets an initial value to the values of the plurality of parameters θ before first loop processing. The initial value of each parameter is, for example, a value designated in advance by a user. Furthermore, as the initial value of each parameter, a random value may be used.

The quantum calculation management unit 110 acquires a calculation result of the energy based on the variational quantum circuit parameterized by the plurality of parameters θ, from the quantum computer 200. When acquiring the calculation result of the energy, the quantum calculation management unit 110 determines whether or not the energy has converged. If the energy does not converge, the quantum calculation management unit 110 instructs the optimization calculation unit 120 to optimize the parameter. At this time, the quantum calculation management unit 110 can designate a parameter to be optimized for the optimization calculation unit 120. For example, the quantum calculation management unit 110 designates all of the plurality of parameters θ as the optimization targets, in the optimization calculation of the first loop processing. Furthermore, the quantum calculation management unit 110 designates a parameter of which the value has changed by the threshold or more in the first loop processing as the optimization target, in the optimization calculation of the second and subsequent loop processing.

The optimization calculation unit 120 updates all or some values of the plurality of parameters θ, in a direction in which the energy value decreases, for each loop processing. For example, the optimization calculation unit 120 sets only the parameters designated from the quantum calculation management unit 110 as the update targets and calculates values of the updated parameters. When the optimization calculation ends, the optimization calculation unit 120 notifies the quantum calculation management unit 110 of the values of the plurality of parameters θ of which all or some of values are updated.

Note that the function of each element illustrated in FIG. 5 may be implemented, for example, by causing a computer to execute a program module corresponding to the element.

Next, a processing procedure of the VQE calculation will be described in detail.

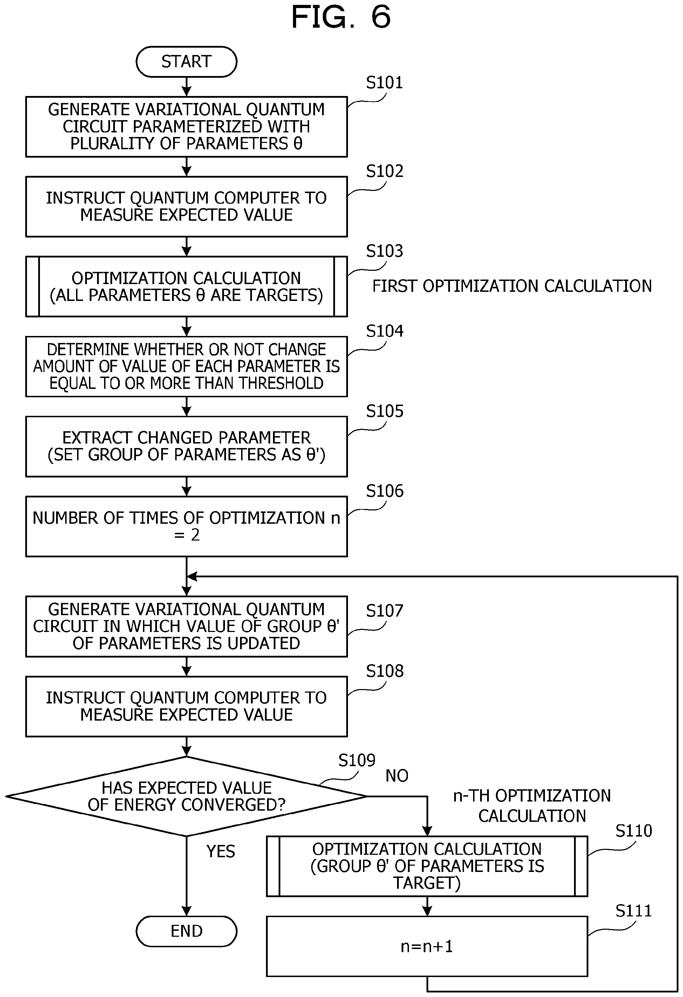

FIG. 6 is a flowchart illustrating an example of the processing procedure of the VQE calculation. Hereinafter, the processing illustrated in FIG. 6 will be described in line with step numbers.

[Step S101] The quantum calculation management unit 110 generates the variational quantum circuit parameterized by the plurality of parameters θ = {θ₁, θ₂,...}. The variational quantum circuit is determined according to a problem to be solved. For example, the quantum calculation management unit 110 generates a quantum circuit according to an operation from the user. Furthermore, the quantum calculation management unit 110 may acquire the variational quantum circuit stored in the storage device 103 in advance in association with the problem to be solved. The number of parameters used for the variational quantum circuit increases, as the scale of the problem is larger.

[Step S102] The quantum calculation management unit 110 gives the initial values of the plurality of parameters θ to the generated variational quantum circuit and instructs the quantum computer 200 to measure an expected value using the variational quantum circuit. For example, the quantum calculation management unit 110 sets a value designated by the user or a random value, as the initial value of the plurality of parameters θ. In response to the instruction from the quantum calculation management unit 110, the quantum computer 200 performs the gate operation of the quantum bit according to the variational quantum circuit and measures an expected value of the value of the operated quantum bit. The quantum calculation management unit 110 calculates the expected value of the energy based on the expected value measured by the quantum computer 200.

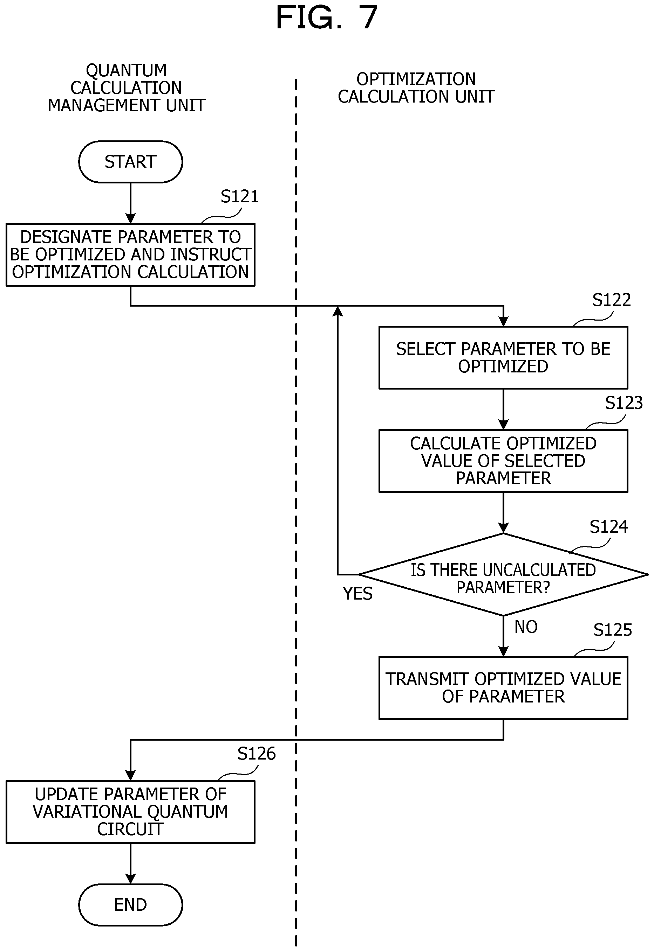

[Step S103] The quantum calculation management unit 110 executes first optimization calculation processing in cooperation with the optimization calculation unit 120. An optimization target in the first optimization calculation includes all of the plurality of parameters θ. Details of the optimization calculation processing will be described later (refer to FIG. 7).

[Step S104] The quantum calculation management unit 110 determines whether or not a change amount between values before and after the optimization is equal to or more than the threshold, for each of the plurality of parameters θ.

[Step S105] The quantum calculation management unit 110 extracts a parameter, of which a value changes by the threshold or more, from among the plurality of parameters θ. Then, the quantum calculation management unit 110 sets a group of the extracted parameters as θ'. In the subsequent loop processing, only the parameters included in the group θ' of the parameters are set as optimization calculation targets, and parameters other than that are excluded from the optimization calculation targets.

[Step S106] The quantum calculation management unit 110 sets a variable n indicating the number of times of optimization to "2" (n = 2).

[Step S107] The quantum calculation management unit 110 generates a variational quantum circuit in which the value of the group θ' of the parameters in the variational quantum circuit generated in step S101 is updated.

[Step S108] The quantum calculation management unit 110 instructs the quantum computer 200 to measure the expected value using the variational quantum circuit of which the group θ' of the parameters is updated. The quantum computer 200 calculates the expected value of the energy in response to the instruction from the quantum calculation management unit 110. The quantum calculation management unit 110 calculates the expected value of the energy based on the expected value measured by the quantum computer 200.

[Step S109] The quantum calculation management unit 110 determines whether or not the expected value of the energy has converged. For example, the quantum calculation management unit 110 calculates a difference between the expected value of the energy calculated in the previous loop processing and the expected value of the energy calculated in the current loop processing. If the calculated difference is equal to or more than a predetermined threshold, the quantum calculation management unit 110 determines that the expected value does not converge. Furthermore, if the calculated difference is less than the predetermined threshold, the quantum calculation management unit 110 determines that the expected value converges. If the expected value does not converge, the quantum calculation management unit 110 proceeds the processing to step S110. Furthermore, if the expected value converges, the quantum calculation management unit 110 ends the VQE calculation processing.

[Step S110] The quantum calculation management unit 110 executes n-th optimization calculation processing (n ≥ 2) in cooperation with the optimization calculation unit 120. An optimization target in the n-th optimization calculation includes the parameters included in the group θ' of the parameters.

[Step S111] The quantum calculation management unit 110 adds one to the number of times of optimization n (n = n + 1). Thereafter, the quantum calculation management unit 110 proceeds the processing to step S107.

Through such processing, the minimum value of the expected value of the energy is obtained. That is, the expected value of the energy in the ground state of the quantum many-body system such as molecules can be obtained.

FIG. 7 is a flowchart illustrating an example of a procedure of the optimization calculation processing. Hereinafter, the processing illustrated in FIG. 7 will be described in line with step numbers.

[Step S121] The quantum calculation management unit 110 designates a parameter to be optimized and instructs the optimization calculation unit 120 to perform the optimization calculation. For example, in a case of the first optimization calculation, the quantum calculation management unit 110 designates all of the plurality of parameters θ as the optimization targets. Furthermore, in the second and subsequent optimization calculation, the quantum calculation management unit 110 designates the parameters included in the group θ' of the parameters as the optimization targets.

[Step S122] The optimization calculation unit 120 selects one uncalculated parameter from among the parameters to be optimized.

[Step S123] The optimization calculation unit 120 calculates an optimized value of the selected parameter. For example, the optimization calculation unit 120 calculates a value for one step of the optimization of the selected parameter so as to lower the energy value, by a natural gradient method. The parameter optimization calculation method by the natural gradient method is described in detail in Non-Patent Documents 2 and 3 described above.

[Step S124] The optimization calculation unit 120 determines whether or not there is a parameter to be optimized of which the optimized value is uncalculated. In a case where there is the uncalculated parameter, the optimization calculation unit 120 proceeds the processing to step S122. Furthermore, in a case where the calculation of the optimized value has completed for all the parameters to be optimized, the optimization calculation unit 120 proceeds the processing to step S125.

[Step S125] The optimization calculation unit 120 transmits the optimized value of each of the parameters to be optimized to the quantum calculation management unit 110.

[Step S126] The quantum calculation management unit 110 updates the parameter to be optimized of the variational quantum circuit to the optimized value calculated by the optimization calculation unit 120.

According to the VQE calculation processing described above, the parameter of which the value changes only by less than the threshold in the first optimization calculation is excluded from the optimization calculation targets in the second and subsequent optimization calculation. By reducing the number of parameters to be the optimization calculation targets, the number of times of calculation of the values of the optimized parameters is reduced, and the optimization calculation becomes more efficient.

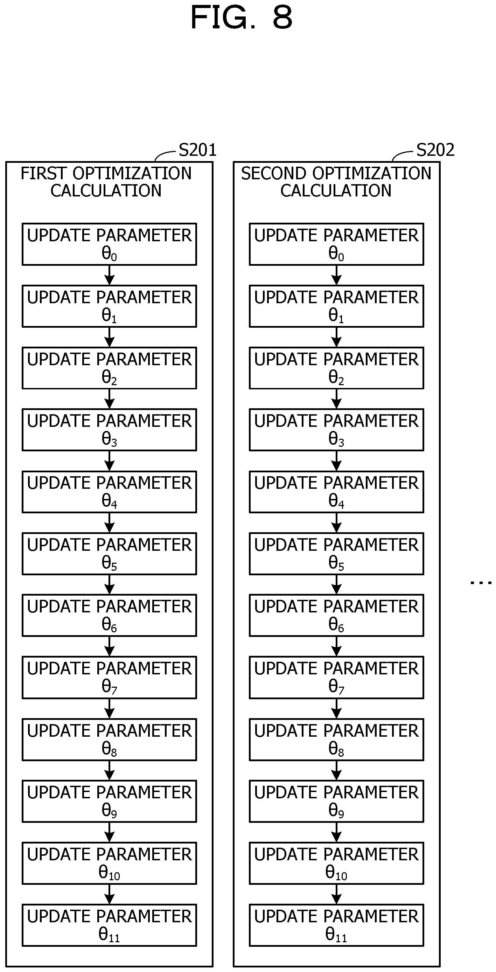

Hereinafter, an effect of shortening the calculation time in the entire processing by reducing the number of parameters to be the optimization calculation targets will be described with reference to FIGs. 8 to 13.

FIG. 8 is a diagram illustrating a comparative example of the VQE calculation processing for hydrogen molecules. In FIG. 8, an example of optimization calculation in a case where the VQE calculation is performed for hydrogen molecules (H₂) without reducing the number of parameters to be the optimization calculation targets is illustrated as the comparative example. Hereinafter, this comparative example is referred to as a first case. In the first case, the optimization calculation is performed for all the parameters for each loop processing, through the entire VQE calculation. Note that the variational quantum circuit in the VQE calculation of the hydrogen molecule is the variational quantum circuit 30 illustrated in FIG. 4.

In the first case, the optimized values are calculated for all the 12 parameters (θ₀, θ₁,..., and θ₁₁) used for the variational quantum circuit 30, in the first optimization calculation (step S201), and the value of each parameter is updated. In the second optimization calculation (step S202), the optimized values are calculated for all the 12 parameters, and the value of each parameter is updated. Similarly, in the third and subsequent optimization calculation, the optimized values are calculated for all the 12 parameters.

When such optimization calculation is repeated, there are the parameter of which the value changes by the threshold or more for each optimization calculation and the parameter of which the value changes only by less than the threshold even if the optimization calculation is performed.

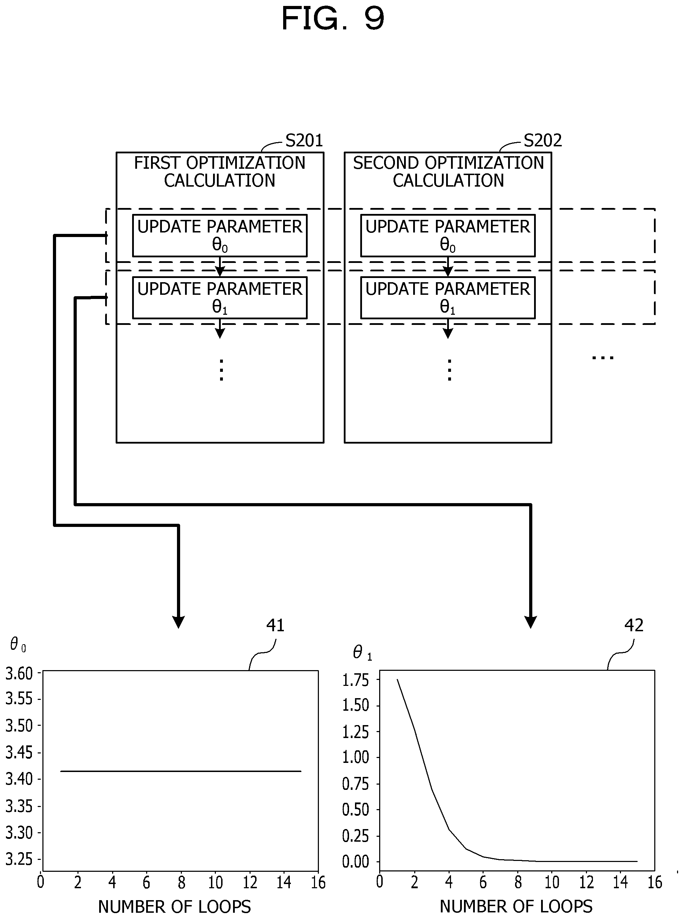

FIG. 9 is a diagram illustrating an example of a change situation of a value for each parameter. In FIG. 9, a transition situation of values for each optimization calculation of parameters θ₀ and θ₁ is illustrated. A graph 41 illustrates a transition situation of a value for each loop processing in a VQE calculation process, regarding the parameter θ₀. The horizontal axis of the graph 41 indicates the number of loops, and the vertical axis indicates the value of the parameter θ₀. As illustrated in the graph 41, regarding the parameter θ₀, no matter how many times the optimization calculation for each loop processing is executed, the value does not change. Such a transition situation of the value of the parameter is similar for other parameters of which the value is not changed by the optimization in the first loop processing.

A graph 42 illustrates a transition situation of a value for each loop in the VQE calculation process, regarding the parameter θ₁. The horizontal axis of the graph 42 indicates the number of loops, and the vertical axis indicates the value of the parameter θ₁. As illustrated in the graph 42, regarding the parameter θ₁, the value is changed each time when the optimization calculation of the loop processing is performed. Such a transition situation of the value of the parameter is similar for the other parameters of which the value is changed by the optimization in the first loop processing.

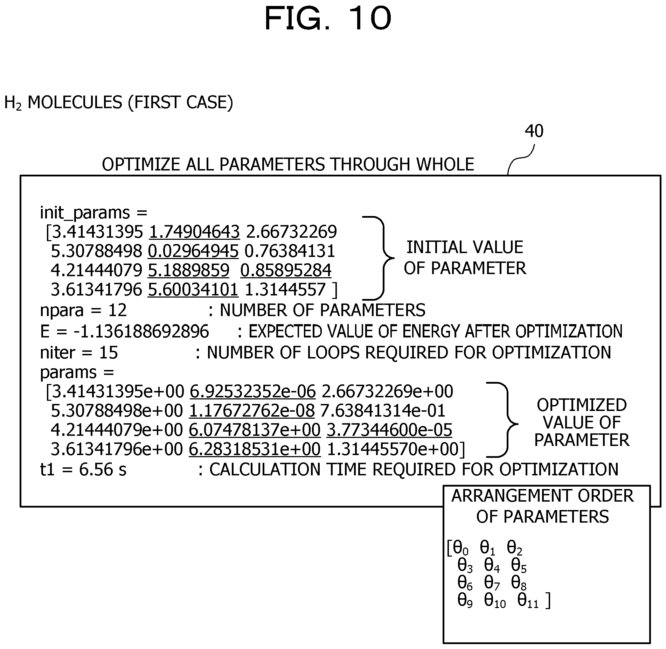

FIG. 10 is a diagram illustrating an example of a calculation result of the first case (comparative example) of the VQE calculation processing for the hydrogen molecules. Meaning of each numerical value indicated in a calculation result 40 is as follows.

An initial value of the plurality of parameters θ is indicated by an item name "init_params". Note that the value of the parameter of which the value is changed by the optimization of the first loop processing, among the initial values of the plurality of parameters, is underlined. In the example in FIG. 10, the values are changed by the optimization of the first loop processing, for the five parameters θ₁, θ₄, θ₇, θ₈, and θ₁₀.

The number of parameters is indicated by an item name "npara". The number of parameters in a case of the hydrogen molecule is "12".

An expected value of energy after the parameter is optimized until the expected value of the energy converges is indicated by an item name "E". The number of loops required to optimize the parameter is indicated by an item name "niter".

Values of the plurality of parameters after optimization are indicated by an item name "params". A value of the parameter changed from the initial value, among the values of the plurality of parameters after optimization, is underlined. In the example in FIG. 10, the five parameters θ₁, θ₄, θ₇, θ₈, and θ₁₀ are optimized to values different from the initial value.

A calculation time (VQE calculation time) required to optimize the parameter is indicated by an item name "t1".

Next, a case will be described where efficiency of the VQE calculation processing for the hydrogen molecules is improved by the processing illustrated in the flowchart in FIG. 6.

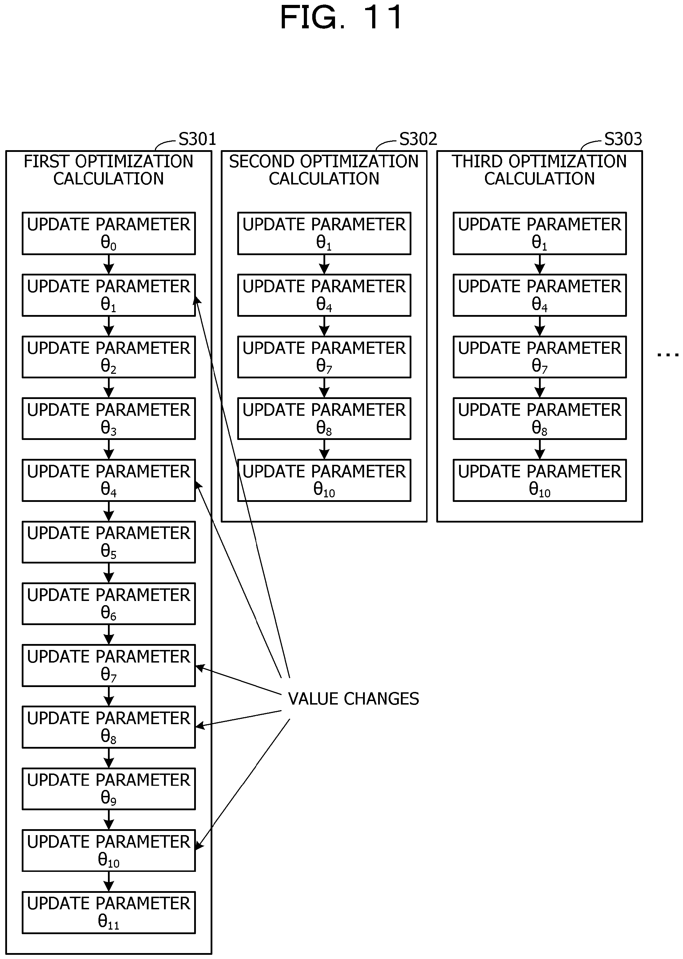

FIG. 11 is a diagram illustrating an example of efficiency improvement of the VQE calculation processing for the hydrogen molecules. Hereinafter, an example in which the efficiency of the VQE calculation processing for the hydrogen molecules is improved is referred to as a second case. In the second case, only the parameter of which the value is changed by the threshold or more in the first optimization calculation is set as a target of the optimization calculation in the second and subsequent parameter optimization calculation of the VQE calculation.

In the second case, the optimized values are calculated for all the 12 parameters (θ₀, θ₁,..., and θ₁₁) used for the variational quantum circuit 30, in the first optimization calculation (step S301), and the value of each parameter is updated. At this time, among the 12 parameters, the values of the five parameters θ₂, θ₄, θ₇, θ₈, and θ₁₀ are changed by the threshold or more, and the values of the other parameters only change by less than the threshold.

In this case, in the second optimization calculation (step S302), the optimized values of only the five parameters of which the values are changed by the threshold or more in the first optimization calculation are calculated, and the values of the five parameters are updated. Similarly, in the third optimization calculation (step S303), the optimized values of all of the five parameters are calculated. Hereinafter, in the fourth and subsequent optimization calculation, the optimized values of only the five parameters are calculated.

FIG. 12 is a diagram illustrating an example of a calculation result in a case where the efficiency of the VQE calculation processing for the hydrogen molecules is improved. In FIG. 12, a calculation result 50 of the second case of the VQE calculation for the hydrogen molecules (H₂) is illustrated as an application case of the processing illustrated in FIG. 6. Meaning of each numerical value indicated in the calculation result 50 is as follows.

Initial values of the plurality of parameters θ are indicated by an item name "init_params0". Note that the value of the parameter of which the value is changed by the optimization calculation of the first loop processing, among the initial values of the plurality of parameters, is underlined. In the example in FIG. 12, the values are changed by the optimization of the first loop processing, for the five parameters θ₁, θ₄, θ₇, θ₈, and θ₁₀.

The number of parameters to be optimized in the first loop processing is indicated by an item name "npara0". Since there are 12 parameters in a case of the hydrogen molecule, the number of parameters to be optimized in the first loop processing is "12".

What is indicated by the item name "init_params" is the value of the group θ' of the parameters updated by the optimization calculation in the second and subsequent loop processing. In the example in FIG. 12, the parameters θ₁, θ₄, θ₇, θ₈, and θ₁₀ are included in the group θ' of the parameters.

The number of parameters included in the group θ' of the parameters is indicated by an item name "npara". In the example in FIG. 12, the number of parameters is "5".

An expected value of energy after the parameter is optimized until all the energy converges is indicated by an item name "E". The number of loops required to optimize the parameter is indicated by an item name "niter".

Values of the plurality of parameters after optimization for the group θ' of the parameters are indicated by an item name "params". A calculation time (VQE calculation time) required to optimize the parameter is indicated by an item name "t2".

Here, when the calculation result 40 of the first case illustrated in FIG. 10 is compared with the calculation result 50 of the second case illustrated in FIG. 12, a time required for the calculation is shortened from "t1 = 6.56 s" to "t2 = 2.64 s". Then, the calculation time is reduced to about 1/2.5.

Next, the numbers of parameters set as the optimization calculation targets in the second and subsequent loop processing are compared. When it is assumed that the number of parameters set as the optimization calculation targets in the second and subsequent loop processing in the first case be n1, "n1 = 12". On the other hand, when it is assumed that the number of parameters set as the optimization calculation targets in the second and subsequent loop processing in the second case be n2, "n2 = 5". That is, a reduction ratio of the number of parameters set as the optimization calculation targets is "n2/n1 = 5/12 = 1/2.4".

In this way, the calculation time is reduced approximately according to the order of the number of parameters. That is, as the reduction ratio of the number of parameters set as the optimization calculation targets in the second and subsequent loop processing is larger, a processing time of the entire VQE calculation is shortened.

In the examples illustrated in FIGs. 10 and 12, the energy value of the ground state of the hydrogen molecule is obtained by the VQE algorithm. However, even in a case of other substances, an effect of reducing the number of parameters can be similarly obtained. For example, for lithium hydride (LiH), the similar effect of reducing the calculation time can be confirmed. Note that a variational quantum circuit used for VQE calculation of the lithium hydride is the same as the variational quantum circuit 30 illustrated in FIG. 4.

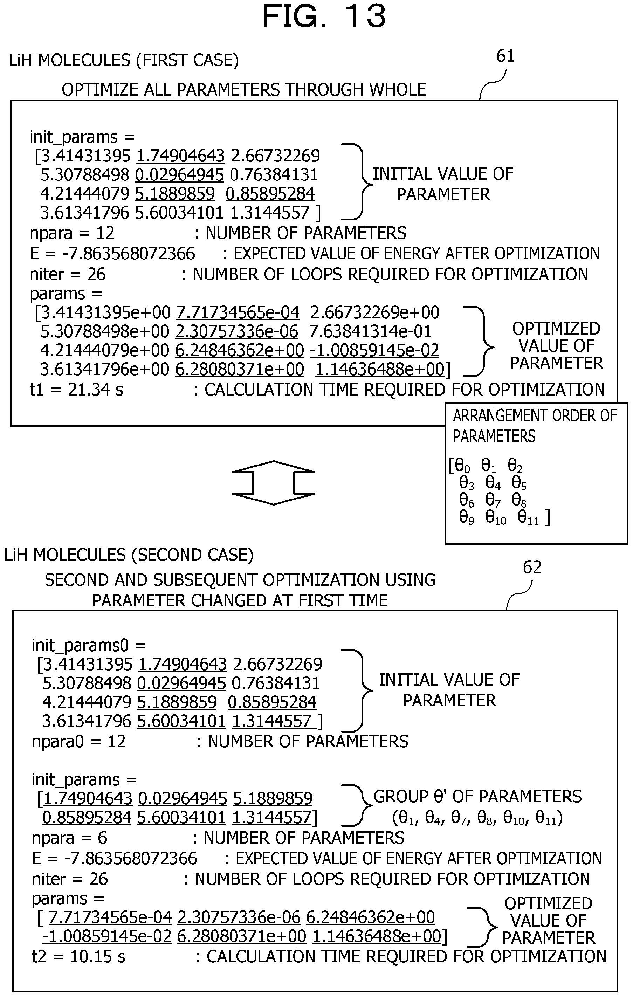

FIG. 13 is a diagram illustrating an example of a result of VQE calculation processing for the lithium hydride. In the upper portion in FIG. 13, as a comparative example, a calculation result 61 of a first case of the VQE calculation for the lithium hydride (LiH) is illustrated. In a lower portion in FIG. 13, a calculation result 62 of a second case of the VQE calculation for the lithium hydride (LiH) is illustrated, as an application case of the processing illustrated in FIG. 6. In the first case, the optimization calculation is performed for all the parameters for each loop processing, through the entire VQE calculation. In the second case, the optimization calculation of the second and subsequent loop processing is performed for the parameter of which the value changes by the threshold or more in the first loop processing of the VQE calculation.

Meaning of a numerical value set to each item name indicated in the calculation result 61 is the same as that of the numerical value of the same item name in the calculation result 40 illustrated in FIG. 10. Meaning of a numerical value set to each item name indicated in the calculation result 62 is the same as that of the numerical value of the same item name in the calculation result 50 illustrated in FIG. 12. In the example in FIG. 13, the six parameters θ₁, θ₄, θ₇, θ₈, θ₁₀, and θ₁₁ are included in the group θ' of the parameters in the second case.

Here, when the calculation result 61 of the first case is compared with the calculation result 62 of the second case, the time required for the calculation is shortened from "t1 = 21.34 s" to "t2 = 10.15 s". Then, the calculation time is reduced to about 1/2.1 (t2/t1 = 10.15/21.34 ≈ 1/2.1).

Next, the numbers of parameters set as the optimization calculation targets in the second and subsequent loop processing are compared. When it is assumed that the number of parameters set as the optimization calculation targets in the second and subsequent loop processing in the first case be n1, "n1 = 12". On the other hand, when it is assumed that the number of parameters set as the optimization calculation targets in the second and subsequent loop processing in the second case be n2, "n2 = 6". That is, a reduction ratio of the number of parameters set as the optimization calculation targets is "n2/n1 = 6/12 = 1/2".

In this way, in the VQE calculation for the lithium hydride, the calculation time is reduced approximately according to the order of the number of parameters.

### [Other Embodiments]

In the second embodiment, subsequent optimization calculation is suppressed for the parameter of which the value does not substantially change in the first optimization calculation. However, even in the second and subsequent optimization calculation, the subsequent optimization calculation may be suppressed for the parameter of which the value does not substantially change before and after the optimization. For example, in a case of the parameter θ₁ illustrated in FIG. 9, the value changes in the first to the eighth optimization calculation. However, in the ninth and subsequent optimization calculation, the value does not substantially change. In this case, the quantum calculation management unit 110 may determine that the value of the parameter θ₁ does not change in the ninth optimization calculation and exclude the parameter θ₁ from the optimization calculation targets in the tenth and subsequent optimization calculation.

The above description merely indicates a principle of the present invention. Moreover, numerous modifications and variations may be made by those skilled in the art, and the present invention is not limited to the above-described or illustrated exact configuration and application example, and all corresponding modifications and equivalents are regarded to fall within the scope of the present invention by appended claims and equivalents thereof.

### REFERENCE SIGNS LIST

1 quantum computer
2 variational quantum circuit
10 information processing apparatus
11 storage unit
12 processing unit

## Claims

1. A parameter optimization program for causing a computer to execute processing comprising:
executing first parameter adjustment processing of calculating an updated value of each of a plurality of parameters so that an expected value of energy takes a local minimum value, based on the expected value of the energy calculated by using a variational quantum circuit that includes the plurality of parameters;
determining whether or not to set each of the plurality of parameters as an adjustment target in second parameter adjustment processing, based on whether or not a change amount between values before and after update of each of the plurality of parameters by the first parameter adjustment processing is equal to or more than a threshold; and
executing the second parameter adjustment processing, on the parameter determined as the adjustment target.

2. The parameter optimization program according to claim 1, wherein
in the processing of determining whether or not to set the parameter as the adjustment target, a parameter of which the change amount is equal to or more than the threshold among the plurality of parameters is determined as the adjustment target, and a parameter of which the change amount is less than the threshold among the plurality of parameters is excluded from the adjustment target.

3. The parameter optimization program according to claim 1 or 2, wherein
in the processing of determining whether or not to set the parameter as the adjustment target, after the first parameter adjustment processing, whether or not to set each of the plurality of parameters as the adjustment target in the second parameter adjustment processing to be repeatedly executed thereafter is determined.

4. A parameter optimization method comprising:
executing first parameter adjustment processing of calculating an updated value of each of a plurality of parameters so that an expected value of energy takes a local minimum value, based on the expected value of the energy calculated by using a variational quantum circuit that includes the plurality of parameters;
determining whether or not to set each of the plurality of parameters as an adjustment target in second parameter adjustment processing, based on whether or not a change amount between values before and after update of each of the plurality of parameters by the first parameter adjustment processing is equal to or more than a threshold; and
executing the second parameter adjustment processing, on the parameter determined as the adjustment target.

5. An information processing apparatus comprising:
a processing unit configured to:
execute first parameter adjustment processing of calculating an updated value of each of a plurality of parameters so that an expected value of energy takes a local minimum value, based on the expected value of the energy calculated by using a variational quantum circuit that includes the plurality of parameters;
determine whether or not to set each of the plurality of parameters as an adjustment target in second parameter adjustment processing, based on whether or not a change amount between values before and after update of each of the plurality of parameters by the first parameter adjustment processing is equal to or more than a threshold; and
execute the second parameter adjustment processing, on the parameter determined as the adjustment target.
